# EUROPÄISCHE PATENTSCHRIFT

(11) **EP 3 445 606 B1**
(45) Veröffentlichungstag und Bekanntmachung des Hinweises auf die Patenterteilung: **11.11.2020**
(21) Anmeldenummer: 17715046.3
(22) Anmeldetag: 28.03.2017
(51) Int. Cl.: B60L 50/40, B60L 53/122, B60L 53/126, B60L 53/30, B60M 1/36

(54) **VERFAHREN ZUM BETREIBEN EINER FERTIGUNGSANLAGE MIT EINEM FAHRZEUG UND ZUMINDEST EINEM LADEPUNKT UND FERTIGUNGSANLAGE MIT FAHRZEUG ZUR DURCHFÜHRUNG DES VERFAHRENS**
METHOD FOR OPERATING A PRODUCTION PLANT COMPRISING A VEHICLE AND AT LEAST ONE CHARGING POINT, AND PRODUCTION PLANT HAVING A VEHICLE FOR CARRYING OUT SAID METHOD
PROCÉDÉ POUR FAIRE FONCTIONNER UNE INSTALLATION DE FABRICATION COMPRENANT UN VÉHICULE ET AU MOINS UN POINT DE RECHARGE, ET INSTALLATION DE FABRICATION DOTÉE DU VÉHICULE POUR LA MISE EN OEUVRE DUDIT PROCÉDÉ

(30) Priorität: 22.04.2016 DE 102016004971
(43) Veröffentlichungstag der Anmeldung: 27.02.2019
(73) Patentinhaber: SEW-Eurodrive GmbH & Co, 76646 Bruchsal (DE)
(72) Erfinder: SODER, Johann, 76707 Hambrücken (DE)
(86) Internationale Anmeldenummer: PCT/EP2017/025062
(87) Internationale Veröffentlichungsnummer: WO 2017/182130

(56) Entgegenhaltungen:
- WO-A1-2013/116651
- DE-A1- 19 842 738
- JP-A- 2014 236 539
- US-A1- 2010 237 709
- Anonymous: "AGV (Automated Guided Vehicle) Systems - AGV Battery Charging | Vahle Electrification", , 27. März 2016 (2016-03-27), XP055378870, https://web.archive.org/web/20160327155349 /http://www.vahleinc.com/battery-charging- contacts.html Gefunden im Internet: URL:http://www.vahleinc.com/battery-chargi ng-contacts.html [gefunden am 2017-06-06]

## Beschreibung

Die Erfindung betrifft ein Verfahren zum Betreiben einer Fertigungsanlage mit einem Fahrzeug und zumindest einem Ladepunkt und Fertigungsanlage mit Fahrzeug zur Durchführung des Verfahrens.

Es ist allgemein bekannt, dass eine Fertigungsanlage Arbeitsstationen aufweist, an welchen jeweils ein Herstellverfahrensschritt auszuführen ist.

**Aus der XP055378870 ist als nächstliegender Stand der Technik ein kontaktbehaftetes Aufladen von Batterien eines Fahrzeugs an einem Stelle bekannt. Hingegen ist aus der Aus der XP055378870 auch ein kontaktloses, also induktives, Aufladen von Batterien eines Fahrzeugs während der Fahrt entlang eines Linienleiters an jedem Punkt des Wegs ausführbar ist.**

**Aus der** DE 198 42 738 A1 **ist ein schienengebundenes Transfersystem mit induktiver Energieübertragung bekannt.**

**Aus der** JP 2014 236539 A **ist eine kontaktlose induktive Beladung von einer flachen Platte her bekannt.**

**Aus der** US 2010/237709 A1 **ist ebenfalls eine induktive Energieübertragung bekannt.**

**Aus der** WO 2013/116651 A1 **ist ein induktiv mit Leistung versorgbarer Fahrwagen bekannt.**

Der Erfindung liegt daher die Aufgabe zugrunde, eine Fertigungsanlage weiterzubilden, wobei ein geringer baulicher Aufwand für die Fertigungsanlage notwendig sein soll.

Erfindungsgemäß wird die Aufgabe bei dem Verfahren nach den in Anspruch 1 und bei der Fertigungsanlage nach den in Anspruch 2 angegebenen Merkmalen gelöst.

Wichtige Merkmale der Erfindung bei dem Verfahren zum Betreiben einer Fertigungsanlage mit einem Fahrzeug und zumindest einem Ladepunkt sind, dass
- in einem ersten Verfahrensschritt das Fahrzeug zum Ladepunkt fährt,
- in einem zweiten Verfahrensschritt das Fahrzeug gedreht wird, insbesondere mittels des omnidirektionalen Antriebs oder des Differentialantriebs,
- in einem dritten Verfahrensschritt das Fahrzeug weiterfährt,
wobei während des zweiten Verfahrensschrittes elektrische Energie vom Ladepunkt induktiv an das Fahrzeug übertragen wird.

Von Vorteil ist dabei, dass die Zeitdauer der Drehung, also der Änderung der Fahrtrichtung, nutzbar ist für eine induktive Energieübertragung. Im Vergleich zu einer Kurvenfahrt, also Drehung oder Änderung der Fahrtrichtung **bei gleichzeitigem** Fortbewegen des Fahrzeugs, ist abhängig von der Dimensionierung der Zeitaufwand bis zum Erreichen des Ziels gegebenenfalls größer. Jedoch ist die Masse des Fahrzeugs kleiner wählbar, da ein kleinerer Energiespeicher genügt als bei einer Fahrt ohne Anhalten am Ladepunkt. Außerdem ist kein weiträumiges ausnehmen des Bodens zur Verlegung eines langgestreckt zu verlegenden Primärleiters notwendig sondern es genügt eine kompakte Ausnehmung für den Ladepunkt, so dass eine Primärwicklung in den Boden hinein verlegbar ist.

Wichtige Merkmale bei der Fertigungsanlage mit Fahrzeug zur Durchführung eines Verfahrens sind, dass der Ladepunkt eine Primärwicklung aufweist, insbesondere in welche ein mittelfrequenter Strom eingeprägt wird.

Von Vorteil ist dabei, dass vom Ladepunkt aus eine induktive Übertragung elektrischer Energie ans Fahrzeug ausführbar ist.

Bei einer vorteilhaften Ausgestaltung weist das Fahrzeug eine Sekundärwicklung auf, insbesondere an seiner Unterseite, also der dem Boden zugewandten Seite des Fahrzeugs, insbesondere wobei der Sekundärwicklung eine derartige Kapazität in Reihe und/oder parallel zugeschaltet wird, dass die Resonanzfrequenz des so gebildeten Schwingkreises der Frequenz des in die Primärwicklung eingeprägten Wechselstromes entspricht. Von Vorteil ist dabei, dass ein möglichst geringer Abstand und somit eine hohe induktive Kopplungsstärke erreichbar ist. Durch die resonante Übertragung ist ein hoher Wirkungsgrad bei der induktiven Übertragung erreichbar.

Das Fahrzeug weist einen omnidirektionalen Antrieb, einen Differentialantrieb auf und/oder ist ohne Weiterbewegung lenkbar oder drehbar, insbesondere indem das Fahrzeug Mecanum-Räder oder einen Panzerkettenantrieb aufweist. Von Vorteil ist dabei, dass ein Drehen auf der Stelle, also ein Ändern der Ausrichtung des Fahrzeugs, insbesondere also ein Ändern der Fahrtrichtung des Fahrzeugs, ermöglicht ist, ohne dass eine Fortbewegung stattfindet. Somit liegt also eine reine Drehung des Fahrzeugs vor und die induktive Beladung ist in einfacher Weise durch Primärwicklungen ausführbar, die die elektrische Leistung unabhängig von der Drehlage des Fahrzeugs übertragen. Hierzu eignet sich eine Ausführung der Primärwicklung und eventuell der Sekundärwicklung als Ringwicklung.

Bei einer vorteilhaften Ausgestaltung weist die Fertigungsanlage Arbeitsstationen mit jeweils zugeordnetem jeweiligem Ladepunkt auf, welche vom Fahrzeug anfahrbar sind,
wobei während der Durchführung einer Bearbeitung am vom Fahrzeug geförderten Transportgut an der jeweiligen Arbeitsstation elektrische Energie vom jeweiligen Ladepunkt induktiv an das Fahrzeug übertragen wird. Von Vorteil ist dabei, dass das Fahrzeug zur Arbeitsstation fährt, dort über einem Ladepunkt anhält und der Energiespeicher des Fahrzeugs vom Ladepunkt her aufladbar ist mittels der induktiven Übertragung von elektrischer Leistung. Während also bei diesem Aufenthalt an der Arbeitsstation die Bearbeitung des vom Fahrzeug transportierten Transportguts, insbesondere Werkstücks oder Produktes, stattfindet, wird somit der Energiespeicher mit Energie beladen, insbesondere aufgeladen. Danach fährt das Fahrzeug weiter, wobei an der Arbeitsstation übertragene Energie verbraucht wird.

Bei einer vorteilhaften Ausgestaltung ist die Sekundärwicklung mit dem wechselspannungsseitigen Anschluss eines Gleichrichters elektrisch verbunden,
wobei aus dem gleichspannungsseitigen Anschluss des Gleichrichters ein Energiespeicher beladbar ist, aus welchem der elektromotorische Antrieb des Fahrzeugs speisbar ist. Von Vorteil ist dabei, dass dem Energiespeicher die induktiv übertragene elektrische Leistung insbesondere als Gleichstrom zuführbar ist.

Bei einer vorteilhaften Ausgestaltung weist der Energiespeicher einen Doppelschichtkondensator, insbesondere Ultracap, auf. Von Vorteil ist dabei, dass ein schnelles Aufladen ermöglicht ist, insbesondere im Sekundenbereich. Der Verbrauch des Fahrzeugs bei der Weiterfahrt ist derart gering, dass der Energiespeicher die benötigte Leistung im Minutenbereich zur Verfügung stellbar macht.

Bei einer vorteilhaften Ausgestaltung weist die Fertigungsanlage für das Fahrzeug vorgesehene Fahrstrecken, insbesondere ein für das Fahrzeug vorgesehenes Fahrstreckennetz, auf, wobei an jedem Abbiegebereich, insbesondere Kurvenbereich oder Kreuzungsbereich, ein Ladepunkt angeordnet ist. Von Vorteil ist dabei, dass das Fahrzeug zum Ändern der Fahrtrichtung über dem Ladepunkt anhält, so dass die Sekundärwicklung möglichst gut, insbesondere maximal, induktiv gekoppelt ist an die Primärwicklung. Aufgrund dieser großen Kopplungsstärke ist somit eine erhebliche Leistung induktiv übertragbar. Die Zeitdauer der Fahrtrichtungsänderung ist somit nutzbar um induktiv Energie ans Fahrzeug zu übertragen und den Energiespeicher mit Energie zu beladen.

* Bei einer vorteilhaften Ausgestaltung weist der jeweilige Ladepunkt eine Primärwicklung auf, die unterhalb eines vom Fahrzeug überfahrbaren Deckelteils angeordnet ist. Von Vorteil ist dabei, dass der installationsaufwand gering ist, weil nur eine kompakte Ausnehmung im Boden vorzusehen ist und diese in einfacher Weise mit einem überfahrbaren Deckel verschließbar ist. Der Deckel ist aus einem nicht elektrisch leitfähigen Material gefertigt, wie beispielsweise Kunststoff.

Bei einer vorteilhaften Ausgestaltung ist entlang eines Teils der für das Fahrzeug vorgesehenen Fahrstrecke, insbesondere zwischen zwei Arbeitsstationen ein Linienleiter verlegt ist, der mit Wechselstrom beaufschlagbar. Von Vorteil ist dabei, dass zusätzlich zu den Ladepunkten insbesondere bei langen Fahrstrecken eine induktive Versorgung des Fahrzeugs ermöglicht ist.

Durch Ausführen der Primärwicklung und eventuell der Sekundärwicklung als Ringwicklung ist die Übertragung der Energie am Ladepunkt unabhängig von der Drehung des Fahrzeugs ermöglicht. Hierzu sind die Wicklunge drehsymmetrisch zur Drehachse angeordnet.

Bei einer vorteilhaften Ausgestaltung ist zwischen jeweils zwei Ladepunkten zusätzlich ein weiterer Primärleiter langgestreckt verlegt, insbesondere so dass auch eine induktive Energieversorgung des Fahrzeugs während eines vorgesehenen Fahrstreckenabschnitts ausführbar ist,
insbesondere wobei der weitere Primärleiter entlang der Verbindungslinie oder Verbindungsgeraden der beiden Ladepunkte in der Anlage angeordnet ist,
insbesondere wobei der weitere Primärleiter beabstandet ist von den Ladepunkten, insbesondere wobei ein Wechselstrom in den weiteren Primärleiter eingeprägt wird, dessen Frequenz der Frequenz des in die Primärwicklung eingeprägten Stroms entspricht.

Von Vorteil ist dabei, dass auch während der Fahrt eine Versorgung des Fahrzeugs ermöglicht ist.

Bei einer vorteilhaften Ausgestaltung ist die Oberseite, insbesondere also die dem Fahrzeug zugewandte Seite, des Deckelteils kreisförmig,
insbesondere wobei die Ringachse der Primärwicklung durch den Kreismittelpunkt hindurchgeht. Von Vorteil ist somit, dass die Primärwicklung als kreisförmige Ringwicklung ausgeführt ist, deren Mittelpunkt genau unter dem Mittelpunkt des Deckelteils liegt. Somit ist die induktiv übertragbare Leistung beim Drehen des Fahrzeugs über dem Mittelpunkt des Deckelteils konstant, da die induktive Kopplung zwischen Primärwicklung und Sekundärwicklung konstant ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

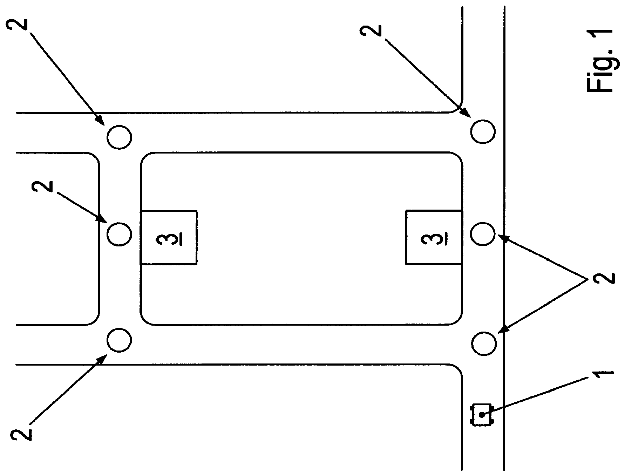

In der Figur 1 ist eine erfindungsgemäße Fertigungsanlage schematisch dargestellt.

Dabei wird das zu fertigende Produkt in mehreren Arbeitsschritten gefertigt, welche an jeweiligen Arbeitsstationen 3 ausgeführt werden.

Ein Fahrzeug fährt die voneinander beabstandeten Arbeitsstationen 3 nacheinander an, wobei das Fahrzeug 1 während der Ausführung des jeweiligen Arbeitsschrittes an der jeweiligen Arbeitsstation 3 anhält und somit induktiv elektrische Energie aufnehmen kann, welche von einem jeweils am Boden der Fertigungsanlage angeordneten Ladepunkt 2 zuführbar ist.

Auch an Kurven oder Verzweigungsstellen, wie Kreuzungen oder abbiegungsstellen, der Fahrwege sind jeweils Ladepunkte am Boden der Fertigungsanlage vorgesehen. Das Fahrzeug 1 weist omnidirektionale Räder oder Rollen auf, so dass das Fahrzeug 1 über dem Ladepunkt drehbar ist, also Hierbei führt die Drehachse vorzugsweise durch den Schwerpunkt des Ladepunktes.

Vorzugsweise ist somit der Ladepunkt mit einer als Primärwicklung verwendeten Ringwicklung ausgeführt, welche mit einem mittelfrequenten Wechselstrom beaufschlagt wird. Der so von einer Stromquelle in die Primärwicklung eingeprägte Wechselstrom erzeugt ein Wechselmagnetfeld, welches an einer am Fahrzeug 1 angeordneten Sekundärwicklung eine Spannung induziert. Dieser Sekundärwicklung ist eine derartig dimensionierte Kapazität in Reihe und/oder parallel zugeschaltet, dass die Resonanzfrequenz des so bewirkten Schwingkreises im Wesentlichen der Frequenz des in die Primärwicklung eingespeisten Wechselstromes gleicht. Bei Ausführung der Sekundärwicklung als Ringwicklung, deren Ringachse den Drehpunkt des über dem Ladepunkt drehenden Fahrzeugs 1 umfasst oder bei derart großer Ausführung der Sekundärwicklung, dass die Projektion der Sekundärwicklung in die die Primärwicklung umfassende Ebene die von der Ringwicklung umfasste Fläche umfasst, induziert der von der Primärwicklung erzeugte magnetische Fluss die genannte Spannung an der Sekundärwicklung.

Die Frequenz des in die Primärwicklung eingeprägten Wechselstromes liegt vorzugsweise zwischen 10 kHz und 1000 kHz.

Wenn also das Fahrzeug 1 sich beim Drehen nicht weiterbewegt, ist eine resonante Übertragung elektrischer Leistung unabhängig vom jeweiligen Drehwinkel ermöglicht.

Wie in der Figur 1 gezeigt, sind diese Ladepunkte vorzugsweise an denjenigen Stellen angeordnet, an welchen eine Drehung des Fahrzeugs 1 ausgeführt wird. Dies sind beispielsweise in Abbiegungsbereich, wie Kreuzungsbereichen. Außerdem sind die Ladepunkte an denjenigen Stellen anordenbar, wo das Fahrzeug 1 anhält, beispielsweise damit ein Arbeitsschritt an einer Arbeitsstation 3 ausgeführt wird.

Beispielsweise dient die Fertigungsanlage zur Produktion eines Getriebemotors. An einer Arbeitsstation 3 wird beispielsweise synthetisches und an einer anderen Arbeitsstation 3 wird beispielsweise ein gewöhnliches, insbesondere natürliches, Schmieröl ins Getriebe eingefüllt. Hierzu ist auf dem Fahrzeug 1 das noch unfertige Getriebe aufgenommen und wird an die entsprechende Arbeitsstation 3 gefahren. Dort angekommen, hält das Fahrzeug 1 an, während dann das Öl eingefüllt wird und gleichzeitig elektrische Leistung ans Fahrzeug übertragen wird.

Das Fahrzeug 1 weist einen Positionsbestimmungssystem auf und ist somit in der Lage, die Istposition des Fahrzeugs zu bestimmen und die dem entsprechenden Ladepunkt 2 zugeordnete Position anzufahren und dort dann anzuhalten.

Das Fahrzeug 1 weist einen elektromotorischen Antrieb auf, der aus einem Energiespeicher speisbar ist, welcher einen Doppelschichtkondensator aufweist. Solche - auch als Ultracap - bezeichneten Energiespeicher sind in der Lage, große Energiemengen schnell aufzunehmen, also mit hohe elektrische Leistungen aufzunehmen.

Der Antrieb weist einen Elektromotor auf, der aus einem Wechselrichter gespeist wird, welcher aus dem Energiespeicher versorgbar ist. Die am Schwingkreis bewirkte Spannung oder der aus dem Schwingkreis herausführbare Strom wird einem Gleichrichter zugeführt, dessen gleichspannungsseitiger Anschluss mit dem Energiespeicher verbunden ist. Der wechselspannungsseitige Anschluss des Gleichrichters ist mit dem Schwingkreis verbunden. Entlang eines Teils der Fahrwege der Fertigungsanlage ist auch ein langgestreckter Primärleiter, insbesondere also ein Linienleiter, verlegbar und mit dem mittelfrequenten Wechselstrom beaufschlagbar. Auf diese Weise ist auch ein induktives, insbesondere also berührungsloses, Zuführen von elektrischer Leistung ans Fahrzeug 1 während dessen Fahrt ausführbar. Allerdings muss hierzu der Primärleiter im Boden verlegt werden, also einen entsprechend langgestreckte Ausnehmung im Boden hergestellt werden.

Der Ladepunkt 2 ist also nicht im mathematischen Sinne punktförmig ausgeführt sondern ist als kompakte Anordnung ausgeführt, welche die in einer im Boden angeordneten Ausnehmung angeordnete Primärwicklung umfasst und einen vom Fahrzeug 1 überfahrbaren Deckel, welcher über der Primärwicklung angeordnet ist. Vorzugsweise ist der Deckel und auch die Primärwicklung in der Bodenebene weniger ausgedehnt als der Bereich zwischen den Rädern des Fahrzeugs 1. Der Ladepunkt 2 ist also der primärseitige Teil des Übertragers.

Vorzugsweise ist am jeweiligen Ladepunkt eine Primärwicklung angeordnet, die an der Innenseite eines Deckelteils angeordnet ist, welches den Ladepunkt zum Fahrzeug hin abdeckt und an einem den Ladepunkt aufnehmenden Boden glatt angeschlossen ist,
insbesondere wobei das Deckelteil kreisförmig ausgeformt ist. Das Deckelteil ragt also nicht aus dem Boden hervor und es steht somit auch keine Kante des Deckelteils aus dem Boden hervor. Somit sind auch Unfallgefahren vermieden, da auch bei schlürfendem Gehen ein Fußgänger nicht am Deckelteil stolpern kann. Da das Deckelteil kreisförmig ist, ist eine Positionierung des Fahrzeugs besonders einfach und präzise ermöglicht. Zwar ist die Primärwicklung auch durch Erfassen der induktiven Kopplung detektierbar, aber eine schnelle und präzise Ansteuerung der für die Drehbewegung optimalen Position ist auch mit anderen Sensoren schon aus großer Entfernung ermöglicht - beispielsweise mittels Bildauswertesystem. Aber auch mit anderen Sensoren, welche an der Unterseite des Fahrzeugs angeordnet sind, ist eine Erkennung sicher ausführbar. Hierzu ist der Deckel aus einem mit dem Sensor detektierbaren Material ausgeführt oder weist eine entsprechende Farbe auf, die mit einem Sensor detektierbar ist.

Bei einem weiteren erfindungsgemäßen Ausführungsbeispiel ist statt der omnidirektionalen Räder das Fahrzeug 1 mit Panzerkettenantrieb oder zwei unabhängig antreibbaren Rädern ausgeführt, so dass durch die unterschiedlichen Drehwinkel oder Drehwinkelgeschwindigkeiten ein entsprechendes Drehen des Fahrzeugs "auf der Stelle", also über dem Ladepunkt, ermöglicht ist.

Bei einem weiteren erfindungsgemäßen Ausführungsbeispiel ist zumindest eine der Arbeitsstationen 3 als Montagezelle ausgeführt, welche wiederum mehrere voneinander beabstandete Arbeitspositionen aufweist, die nacheinander vom Fahrzeug 1 angefahren werden, wobei das Fahrzeug an der jeweiligen Arbeitsposition anhält und somit über einen jeweiligen dort angeordneten weiteren Ladepunkt elektrische Leistung aufnimmt, während der dort auszuführende Arbeitsschritt an dem herzustellenden Produkt ausgeführt wird.

### Bezugszeichenliste

1 Fahrzeug
2 Ladepunkt
3 Arbeitsstation

## Patentansprüche

1. Verfahren zum Betreiben einer Fertigungsanlage mit einem Fahrzeug (1) und zumindest einem Ladepunkt (2),
**wobei**
- in einem ersten Verfahrensschritt das Fahrzeug (1) zum Ladepunkt (2) fährt,
- in einem zweiten Verfahrensschritt das Fahrzeug (1) an dem Ladepunkt, dass ein Drehpunkt ist, gedreht wird, insbesondere mittels eines omnidirektionaten Antriebs oder eines Differentialantriebs, wobei bei der Drehung die **Ausrichtung des Fahrzeugs (1) geändert wird, ohne dass eine Fortbewegung stattfindet,**
- in einem dritten Verfahrensschritt das Fahrzeug (1) weiterfährt, wobei während des zweiten Verfahrensschrittes elektrische **Leistung unabhängig von der Drehlage des Fahrzeugs (1)** von **einer als Ringwicklung ausgeführten Primärwicklung** des Ladepunkts induktiv an das Fahrzeug (1) übertragen wird, wobei die Ringachse der Primärwicklung den Drehpunkt beim Drehen des Fahrzeugs (1) umfasst.

2. Fertigungsanlage mit Fahrzeug (1) wobei ein Verfahren nach Anspruch 1 durchgeführt wird, wobei der Ladepunkt (2) eine **als Ringwicklung ausgeführten** Primärwicklung aufweist, insbesondere in welche ein mittelfrequenter Strom eingeprägt wird, wobei die Ringachse der Primärwicklung den Drehpunkt beim Drehen des Fahrzeugs (1) umfasst, **wobei das Fahrzeug (1) einen omnidirektionalen Antrieb, einen Differentialantrieb aufweist und/oder ohne Weiterbewegung lenkbar oder drehbar ist, insbesondere indem das Fahrzeug (1) Mecanum-Räder oder einen Panzerkettenantrieb aufweist.**

3. Fertigungsanlage nach Anspruch 2, wobei das Fahrzeug (1) eine Sekundärwicklung aufweist, insbesondere an seiner Unterseite, also der dem Boden zugewandten Seite des Fahrzeugs (1),
insbesondere wobei der Sekundärwicklung eine derartige Kapazität in Reihe und/oder parallel zugeschaltet wird, dass die Resonanzfrequenz des so gebildeten Schwingkreises der Frequenz des in die Primärwicklung eingeprägten Wechselstromes entspricht.

4. Fertigungsanlage nach mindestens einem der vorangegangenen Ansprüche, wobei die Fertigungsanlage Arbeitsstationen (3) mit jeweils zugeordnetem jeweiligem Ladepunkt (2) aufweist, welche vom Fahrzeug (1) anfahrbar sind,
wobei während der Durchführung einer Bearbeitung am vom Fahrzeug (1) geförderten Transportgut an der jeweiligen Arbeitsstation (3) elektrische Energie vom jeweiligen Ladepunkt (2) induktiv an das Fahrzeug (1) übertragen wird.

5. Fertigungsanlage nach mindestens einem der vorangegangenen Ansprüche, wobei die Sekundärwicklung mit dem wechselspannungsseitigen Anschluss eines Gleichrichters elektrisch verbunden ist,
wobei aus dem gleichspannungsseitigen Anschluss des Gleichrichters ein Energiespeicher beladbar ist, aus welchem der elektromotorische Antrieb des Fahrzeugs (1) speisbar ist.

6. Fertigungsanlage nach Anspruch 5, wobei der Energiespeicher einen Doppelschichtkondensator, insbesondere Ultracap, aufweist.

7. Fertigungsanlage nach mindestens einem der vorangegangenen Ansprüche, wobei die Fertigungsanlage für das Fahrzeug (1) vorgesehene Fahrstrecken, insbesondere ein für das Fahrzeug (1) vorgesehenes Fahrstreckennetz, aufweist, wobei an jedem Abbiegebereich, insbesondere Kurvenbereich oder Kreuzungsbereich, ein Ladepunkt (2) angeordnet ist.

8. Fertigungsanlage nach mindestens einem der vorangegangenen Ansprüche, wobei der jeweilige Ladepunkt (2) eine Primärwicklung aufweist, die unterhalb eines vom Fahrzeug (1) überfahrbaren Deckelteils angeordnet ist
und/oder dass
der jeweilige Ladepunkt (2) die Primärwicklung aufweist, die an der Innenseite eines Deckelteils angeordnet ist, welches den Ladepunkt (2) zum Fahrzeug (1) hin abdeckt und an einem den Ladepunkt (2) aufnehmenden Boden glatt angeschlossen ist.

9. Fertigungsanlage nach mindestens einem der vorangegangenen Ansprüche, wobei entlang eines Teils der für das Fahrzeug (1) vorgesehenen Fahrstrecke, insbesondere zwischen zwei Arbeitsstationen (3) ein Linienleiter verlegt ist, der mit Wechselstrom beaufschlagbar ist.

10. Fertigungsanlage nach mindestens einem der vorangegangenen Ansprüche, wobei die Sekundärwicklung eine Ringwicklung ist.

11. Fertigungsanlage nach mindestens einem der vorangegangenen Ansprüche, wobei zwischen jeweils zwei Ladepunkten (2) zusätzlich ein weiterer Primärleiter langgestreckt verlegt ist, insbesondere so dass auch eine induktive Energieversorgung des Fahrzeugs (1) während eines vorgesehenen Fahrstreckenabschnitts ausführbar ist,
insbesondere wobei der weitere Primärleiter entlang der Verbindungslinie oder Verbindungsgeraden der beiden Ladepunkte (2) in der Anlage angeordnet ist,
insbesondere wobei der weitere Primärleiter beabstandet ist von den Ladepunkten (2), insbesondere wobei ein Wechselstrom in den weiteren Primärleiter eingeprägt wird, dessen Frequenz der Frequenz des in die Primärwicklung eingeprägten Stroms entspricht.

12. Fertigungsanlage nach Anspruch 8, wobei die Oberseite, insbesondere also die dem Fahrzeug (1) zugewandte Seite, des Deckelteils kreisförmig ist,
insbesondere wobei die Ringachse der Primärwicklung durch den Kreismittelpunkt hindurchgeht.

## Claims

1. A method of operating a production plant having a vehicle (1) and at least one charging point (2),
wherein
- in a first method step, the vehicle (1) travels to the charging point (2),
- in a second method step, the vehicle (1) is rotated at the charging point, which is a pivot point, in particular by means of an omni-directional drive or a differential drive, wherein the orientation of the vehicle (1) is altered upon rotation, without locomotion taking place,
- the vehicle (1) proceeds in a third step,
wherein during the second method step, electric power is transmitted inductively to the vehicle (1) by a primary winding, in the form of a ring winding, of the charging point regardless of the rotational position of the vehicle (1), wherein the ring axis of the primary winding comprises the pivot point upon rotation of the vehicle (1).

2. A production plant with vehicle (1), wherein a method according to claim 1 is carried out,
wherein the charging point (2) has a primary winding in the form of a ring winding, in particular into which a medium-frequency current is impressed, wherein the ring axis of the primary winding comprises the pivot point upon rotation of the vehicle (1)
wherein the vehicle (1) has an omni-directional drive, a differential drive and/or can be steered or rotated without onward motion, in particular in that the vehicle (1) has Mecanum wheels or a tank-track drive.

3. A production plant according to claim 2,
wherein the vehicle (1) has a secondary winding, in particular at its underside, therefore that side of the vehicle (1) facing the ground,
in particular wherein a capacitor is connected in series or in parallel with the secondary winding and is such that the resonance frequency of the thus formed oscillating circuit corresponds to the frequency of the alternating current impressed into the primary winding.

4. A production plant according to at least one of the preceding claims,
wherein the production plant has work stations (3), each with an associated respective charging point (2), approachable by the vehicle (1),
wherein during the carrying out of work on the transported goods, conveyed by the vehicle (1), at the respective work station (3), electrical energy is transmitted inductively from the respective charging point (2) to the vehicle (1).

5. A production plant according to at least one of the preceding claims,
wherein the secondary winding is electrically connected to the connection, at the alternating voltage side, of a rectifier,
wherein an energy store, from which the electromotive drive of the vehicle (1) can be fed, is chargeable from the connection, at the d.c. voltage side, of the rectifier.

6. A production plant according to claim 5,
wherein the energy store has a double layer capacitor, in particular ultracapacitor.

7. A production plant according to at least one of the preceding claims,
wherein the production plant has driving routes provided for the vehicle (1), in particular a driving route network provided for the vehicle (1), wherein a charging point (2) is arranged at each bend region, in particular curve region or intersection region.

8. A production plant according to at least one of the preceding claims,
wherein the respective charging point (2) has a primary winding arranged below a cover part over which the vehicle (1) can travel
and/or in that
the respective charging point (2) has the primary winding, which is arranged at the inner surface of a cover part which covers the charging point (2) towards the vehicle (1) and is attached in a smooth manner to ground receiving the charging point (2).

9. A production plant according to at least one of the preceding claims,
wherein a line conductor is laid along a part of the driving route provided for the vehicle (1), in particular between two work stations (3), and can be acted upon by alternating current.

10. A production plant according to at least one of the preceding claims,
wherein the secondary winding is a ring winding.

11. A production plant according to at least one of the preceding claims,
wherein between in each case two charging points (2) there is additionally laid a further primary conductor in an elongated manner, in particular so that inductive energy supplying of the vehicle (1) can also be carried out during a provided driving route portion,
in particular wherein the further primary conductor is arranged along the connecting line or connecting straight lines of the two charging points (2) in the plant,
in particular wherein the further primary conductor is at a distance from the charging points (2), in particular wherein an alternating current is impressed into the further primary conductor, its frequency corresponding to the frequency of the current impressed into the primary winding.

12. A production plant according to claim 8,
wherein the upper side, in particular therefore the side facing the vehicle (1), of the cover part is circular,
in particular wherein the ring axis of the primary winding passes through the centre of the circle.

## Revendications

1. Procédé d'actionnement d'une installation de fabrication comprenant un véhicule (1) et au moins un point de charge (2),
dans lequel,
- au cours d'une première étape opératoire, le véhicule (1) se déplace vers le point de charge (2),
- au cours d'une deuxième étape opératoire, ledit véhicule (1) est animé d'une rotation au niveau dudit point de charge qui constitue un point de rotation, en particulier au moyen d'un entraînement omnidirectionnel ou d'un entraînement différentiel, l'orientation dudit véhicule (1) étant modifiée, lors de la rotation, sans qu'un mouvement de progression ne s'opère,
- au cours d'une troisième étape opératoire, ledit véhicule (1) poursuit son déplacement,
sachant que,
pendant la deuxième étape opératoire, une puissance électrique est transmise par induction au véhicule (1), par un enroulement primaire dudit point de charge réalisé sous la forme d'un enroulement annulaire, indépendamment de la position que ledit véhicule (1) a prise par rotation, l'axe de l'anneau dudit enroulement primaire incluant le point de rotation lors de la rotation dudit véhicule (1).

2. Installation de fabrication équipée d'un véhicule (1), un procédé conforme à la revendication 1 étant mis en œuvre,
installation dans laquelle
le point de charge (2) est muni d'un enroulement primaire réalisé sous la forme d'un enroulement annulaire dans lequel, en particulier, un courant de fréquence moyenne est injecté, l'axe de l'anneau dudit enroulement primaire incluant le point de rotation lors de la rotation du véhicule (1),
sachant que le véhicule (1) comporte un entraînement omnidirectionnel ou un entraînement différentiel, et/ou peut être braqué ou animé d'une rotation sans poursuite de mouvement, notamment du fait que ledit véhicule (1) est pourvu de roues Mecanum ou d'un entraînement de blindé chenillé.

3. Installation de fabrication selon la revendication 2,
dans laquelle
le véhicule (1) est doté d'un enroulement secondaire en particulier à sa face inférieure, c'est-à-dire à la face dudit véhicule (1) qui est tournée vers le sol,
sachant notamment qu'un condensateur est connecté audit enroulement secondaire, en série et/ou en parallèle, de façon telle que la fréquence de résonance du circuit oscillant ainsi formé corresponde à la fréquence du courant alternatif injecté dans l'enroulement primaire.

4. Installation de fabrication selon au moins l'une des revendications précédentes,
ladite installation de fabrication comprenant des postes de travail (3) qui sont munis, à chaque fois, d'un point de charge (2) respectivement associé et auxquels le véhicule (1) peut être présenté,
sachant que, durant l'exécution d'un traitement effectué sur la marchandise transportée acheminée par le véhicule (1), de l'énergie électrique est transmise par induction audit véhicule (1), par le point de charge (2) respectif, au poste de travail (3) considéré.

5. Installation de fabrication selon au moins l'une des revendications précédentes,
dans laquelle
l'enroulement secondaire est connecté électriquement au raccord d'un redresseur qui est situé côté tension alternative,
sachant qu'un accumulateur d'énergie, à partir duquel l'entraînement électromotorisé du véhicule (1) peut être alimenté, peut être chargé à partir du raccord dudit redresseur qui est situé côté tension continue.

6. Installation de fabrication selon la revendication 5,
dans laquelle
l'accumulateur d'énergie est muni d'un condensateur à double couche, en particulier d'un condensateur à haute capacité.

7. Installation de fabrication selon au moins l'une des revendications précédentes,
ladite installation de fabrication comportant des trajets de déplacement prévus pour le véhicule (1), en particulier un réseau de trajets de déplacement prévu pour ledit véhicule (1), un point de charge (2) étant disposé au niveau de chaque zone de virage, notamment d'une zone en courbe ou d'une zone d'intersection.

8. Installation de fabrication selon au moins l'une des revendications précédentes,
dans laquelle
le point de charge (2) considéré est pourvu d'un enroulement primaire disposé au-dessous d'une partie de recouvrement au-dessus de laquelle le véhicule (1) peut circuler ;
et/ou dans laquelle
le point de charge (2) considéré est doté dudit enroulement primaire disposé à la face intérieure d'une partie de recouvrement qui recouvre ledit point de charge (2) en direction dudit véhicule (1) et est rattachée, de manière uniforme, à un plancher recevant ledit point de charge (2).

9. Installation de fabrication selon au moins l'une des revendications précédentes,
dans laquelle
un conducteur de ligne, pouvant être sollicité par du courant alternatif, est implanté le long d'une partie du trajet de déplacement prévu pour le véhicule (1), notamment entre deux postes de travail (3).

10. Installation de fabrication selon au moins l'une des revendications précédentes,
dans laquelle
l'enroulement secondaire est un enroulement annulaire.

11. Installation de fabrication selon au moins l'une des revendications précédentes,
dans laquelle
un conducteur primaire supplémentaire est additionnellement implanté, avec étendue en longueur, entre deux points de charge (2) respectifs, en particulier de façon telle qu'une alimentation en énergie du véhicule (1), par induction, puisse également être effectuée sur un tronçon de trajet de déplacement prévu,
sachant notamment que ledit conducteur primaire supplémentaire est disposé, dans ladite installation, le long de la ligne de liaison ou de la droite de liaison des deux points de charge (2),
ledit conducteur primaire supplémentaire étant situé à distance desdits points de charge (2),
étant notamment précisé qu'un courant alternatif, dont la fréquence correspond à la fréquence du courant injecté dans l'enroulement primaire, est injecté dans ledit conducteur primaire supplémentaire.

12. Installation de fabrication selon la revendication 8,
dans laquelle
la face supérieure de la partie de recouvrement, c'est-à-dire notamment la face tournée vers le véhicule (1), présente une forme circulaire,
sachant, en particulier, que l'axe de l'anneau de l'enroulement primaire passe par le centre de la circonférence.
